# EUROPÄISCHE PATENTSCHRIFT

(11) **EP 1 318 594 B1**
(45) Veröffentlichungstag und Bekanntmachung des Hinweises auf die Patenterteilung: **05.10.2005**
(21) Anmeldenummer: 01811202.9
(22) Anmeldetag: 10.12.2001
(51) Int. Cl.: H02M 7/48, H02M 7/5387, H02M 1/12

(54) **Stromrichterschaltungsanordnung zur Erhöhung einer Wechselspannung**
Power converter circuit for increasing an AC voltage
Circuit convertisseur de puissance pour augmentation d'une tension alternative

(43) Veröffentlichungstag der Anmeldung: 11.06.2003
(73) Patentinhaber: ABB Schweiz AG, 5400 Baden (CH)
(72) Erfinder: Guggisberg, Adrian, 5301 Station Siggenthal (CH); Steinke, Jürgen, 79774 Albbruck (DE)
(74) Vertreter: ABB Patent Attorneys

(56) Entgegenhaltungen:
- EP-A- 0 576 271
- EP-A- 0 829 948
- US-A- 4 823 251
- US-A- 5 767 631

## Beschreibung

### Technisches Gebiet

Die Erfindung bezieht sich auf das Gebiet der Leistungselektronik. Sie geht aus von einer Stromrichterschaltungsanordnung zur Erhöhung einer Wechselspannung gemäss dem Oberbegriff des unabhängigen Anspruchs.

### Stand der Technik

Derzeit gibt es eine Fülle von Stromrichterschaltungsanordnungen, welche eingangsseitig von einem Gleichspannungszwischenkreis gespeist sind und ausgangsseitig eine Last speisen. Eine solche Stromrichterschaltungsanordnung ist beispielsweise in der EP 0 682 401 A1 angegeben. Darin weist die Stromrichterschaltungsanordnung einen als Wechselrichter ausgeführten Umrichter auf, der ausgangsseitig eine Filterschaltung aufweist und der dreiphasig ausgeführt ist. An diese Filterschaltung ist eine von der Stromrichterschaltungsanordnung mit einer Wechselspannung zu speisende elektrische Last anschliessbar. Mit dieser Filterschaltung nach der EP 0 682 401 A1 ist es möglich, die Änderungsgeschwindigkeit der Umrichterausgangsspannung und damit die Umrichterausgangsspannung selbst zu begrenzen.

In der EP 0 576 271 A2 ist ferner eine Stromrichterschaltungsanordnung mit einem Umrichter angegeben, bei welcher an Wechselspannungsanschlüssen des Umrichters eine Filterschaltung angeschlossen ist und die Filterschaltung mindestens eine Teilfilterschaltung aufweist.

Zudem offenbart die US 5,767,631, die EP 0 829 948 A2 und die US 4,823,251 ebenfalls jeweils eine Stromrichterschaltungsanordnung mit einem Umrichter, wobei an den Wechselspannungsanschlüssen des jeweiligen Umrichters eine durch eine Induktivität und eine Kapazität gebildete Filterschaltung angeschlossen ist.

Problematisch bei der vorstehend genannten Stromrichterschaltungsanordnung nach der EP 0 682 401 A1 ist es, dass die elektrischen Last oft eine gegenüber der Umrichterausgangsspannung erhöhte Wechselspannung benötigt, wobei jedoch diese erhöhte Wechselspannung weder vom Umrichter noch von der Filterschaltung mit ihrer begrenzenden Wirkung an ihrem Ausgang bereitgestellt werden kann. Es ist zwar allgemein bekannt, dass zur Erhöhung einer Wechselspannung ein Transformator mit einem entsprechenden Übersetzungsverhältnis zwischen den Umrichterausgängen und der Filterschaltung vorgesehen werden kann, jedoch ist ein solcher Transformator teuer, wartungsintensiv, verlustbehaftet und benötigt viel Platz.

### Darstellung der Erfindung

Aufgabe der Erfindung ist es deshalb, eine Stromrichterschaltungsanordnung zur Erhöhung einer Wechselspannung anzugeben, welche eine Erzeugung einer gegenüber einer Ausgangsspannung eines Umrichters der Stromrichterschaltungsanordnung erhöhte Wechselspannung auf besonders einfache Weise ermöglicht und welche einfach und damit kostengünstig aufgebaut ist. Diese Aufgabe wird durch die Merkmale des Anspruchs 1 gelöst. In den Unteransprüchen sind vorteilhafte Weiterbildungen der Erfindung angegeben.

Die erfindungsgemässe Stromrichterschaltungsanordnung zur Erhöhung einer Wechselspannung weist einen Umrichter auf, der als Wechselrichter ausgebildet ist. An Wechselspannungsanschlüssen des Umrichters ist weiterhin eine Filterschaltung angeschlossen, welche erfindungsgemäss mindestens eine Teilfilterschaltung umfasst, die derart ausgebildet ist, dass ein in die Teilfilterschaltung fliessender Umrichterausgangsstrom gegenüber einer an Lastanschlüssen der Teilfilterschaltung anliegenden Teilfilterausgangsspannung zeitlich voreilt und zudem eine an den Wechselspannungsanschlüssen anliegende Umrichterausgangsspannung auf einen vorgebbaren Wert begrenzt wird. Durch den mittels der Teilfilterschaltung eingestellten und gegenüber der Teilfilterausgangsspannung zeitlich voreilenden Umrichterausgangsstrom und durch die durch die Teilfilterschaltung auf einen vorgebbaren Wert begrenzte Umrichterausgangsspannung stellt sich vorteilhaft eine Teilfilterausgangsspannung, welche eine Wechselspannung ist, ein, die höher als die Umrichterausgangsspannung ist. Somit kann auf einfache und besonders kostengünstige Weise eine Wechselspannung, insbesondere eine Umrichterausgangsspannung, erhöht werden, ohne dass zusätzliche Beschaltungen wie beispielsweise ein aus dem Stand der Technik bekannter Transformator nötig sind.

In einer bevorzugten Ausführungsform der erfindungsgemässen Stromrichterschaltungsanordnung weist die Teilfilterschaltung eine Filterinduktivität und eine Filterkapazität auf, wobei die Filterkapazität derart ausgelegt ist, dass der Umrichterausgangsstrom gegenüber der Teilfilterausgangsspannung zeitlich voreilend ist und die Filterinduktivität die Umrichterausgangsspannung auf den vorgebbaren Wert begrenzt. Dadurch ist eine besonders einfache und aus passiven Bauelementen aufgebaute Teilfilterschaltung der Stromrichterschaltung erreicht, die keinerlei zusätzliche elektrische Energieversorgung benötigt, um die gewünschte Erhöhung der Teilfilterausgangsspannung beziehungsweise Wechselspannung gegenüber der Umrichterausgangsspannung zu erzielen.

Diese und weitere Aufgaben, Vorteile und Merkmale der vorliegenden Erfindung werden aus der nachfolgenden detaillierten Beschreibung von bevorzugten Ausführungsbeispielen der Erfindung in Verbindung mit der Zeichnung offensichtlich.

### Kurze Beschreibung der Zeichnungen

Es zeigen:
- Fig. 1: eine erste Ausführungsform einer erfindungsgemässen Stromrichterschaltungsanordnung zur Erhöhung einer Wechselspannung,
- Fig. 2: eine zweite Ausführungsform einer erfindungsgemässen Stromrichterschaltungsanordnung zur Erhöhung einer Wechselspannung und
- Fig. 3: ein Zeigerdiagramm der relevanten physikalischen Grössen der erfindungsgemässen Stromrichterschaltungsanordnung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

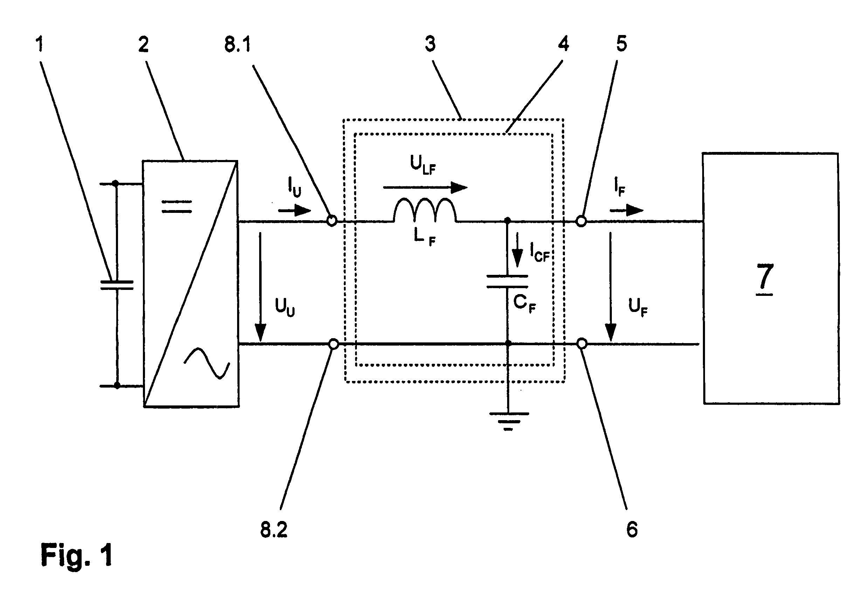

In Fig. 1 ist eine erste Ausführungsform einer erfindungsgemässen Stromrichterschaltungsanordnung zur Erhöhung einer Wechselspannung gezeigt. Die Stromrichterschaltungsanordnung weist gemäss Fig.1 einen Umrichter 2 auf, an dessen Gleichspannungsseite ein Gleichspannungszwischenkreis 1 angeschlossen ist. Der Umrichter 2 ist als Wechselrichter ausgebildet und ist einphasig mit einem ersten Wechselspannungsanschluss 8.1 und einem zweiten Wechselspannungsanschluss 8.2 ausgeführt. An den Wechselspannungsanschlüssen 8.1, 8.2 ist gemäss Fig.1 eine Filterschaltung 3 angeschlossen.

Erfindungsgemäss umfasst die Filterschaltung 3 bei dem einphasig ausgeführten Umrichter 2 gemäss Fig. 1 eine einzige Teilfilterschaltung 4, welche einen ersten Lastanschluss 5 und einen zweiten Lastanschluss 6 aufweist. Die Teitfilterschaltung 4 ist erfindungsgemäss derart ausgebildet, dass ein in die Teilfilterschaltung 4 fliessender Umrichterausgangsstrom I_{U} gegenüber einer an den Lastanschlüssen 5, 6 der Teilfilterschaltung 4 anliegenden Teilfilterausgangsspannung U_{F} zeitlich voreilt und eine an den Wechselspannungsanschlüssen 8.1, 8.2 anliegende Umrichterausgangsspannung U_{U} auf einen vorgebbaren Wert |U_{Ub}| begrenzt wird. Bei dem einphasig ausgeführten Umrichter 2 gemäss Fig. 1 liegt die Umrichterausgangsspannung U_{U} zwischen dem ersten Wechselspannungsanschluss 8.1 und dem zweiten Wechselspannungsanschluss 8.2 an. Gemäss Fig. 1 weist die Teilfilterschaltung 4 eine Filterinduktivität L_{F} und eine Filterkapazität C_{F} auf, wobei die Filterkapazität C_{F} derart ausgelegt ist, dass der Umrichterausgangsstrom I_{U} gegenüber der Teilfilterausgangsspannung U_{F} zeitlich voreilend ist und die Filterinduktivität L_{F} die Umrichterausgangsspannung U_{U} auf den vorgebbaren Wert |U_{Ub}| begrenzt. Gemäss Fig. 1 ist die Filterinduktivität L_{F} am ersten Wechselspannungsanschluss 8.1 des Umrichters 2 angeschlossen. Die Filterkapazität C_{F} ist weiterhin mit dem zweiten Wechselspannungsanschluss 8.2 des Umrichters 2 verbunden. Darüber hinaus ist die Filterkapazität C_{F} mit der Filterinduktivität L_{F} verbunden, wobei der Verbindungspunkt der Filterkapazität C_{F} mit der Filterinduktivität L_{F} den ersten Lastanschluss 5 bildet und der Verbindungspunkt des zweiten Wechselspannungsanschlusses 8.2 mit der Filterkapazität C_{F} den zweiten Lastanschluss 6 bildet. Vorzugsweise ist der Verbindungspunkt des zweiten Wechselspannungsanschlusses 8.2 mit der Filterkapazität C_{F} geerdet, wodurch Spannungen gegenüber Erde, d.h. sogenannte Common-Mode-Spannungen, vorteilhaft gefiltert werden.

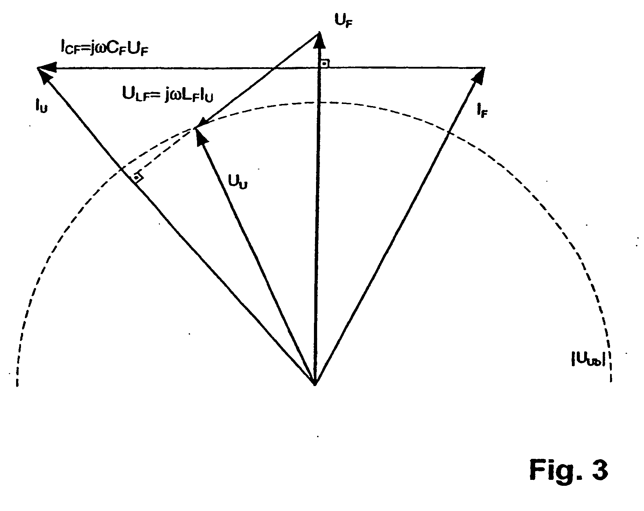

Die Verhältnisse der relevanten physikalischen Grössen, insbesondere der Spannungen und Ströme der erfindungsgemässen Stromrichterschaltungsanordnung sind in einem Zeigerdiagramm gemäss Fig. 3 für die gemäss Fig. 1 gezeigte und vorstehend beschriebene Ausführungsform der erfindungsgemässen Stromrichterschaltungsanordnung dargestellt. Die gewünschte, gegenüber der Umrichterausgangsspannung U_{U} erhöhte Wechselspannung liegt als Teilfilterausgangsspannung U_{F} an den beiden Lastanschlüssen 5, 6 an, die sich aus der nachfolgenden Erläuterung anhand von Fig. 3 ergibt. Gemäss Fig. 3 stellt die Teilfilterschaltung 4 durch deren Auslegung, insbesondere der Filterkapazität C_{F}, den in die Teilfilterschaltung 4 fliessenden Umrichterausgangsstrom I_{U} derart ein, dass der Umrichterausgangsstrom I_{U} gegenüber der Teilfilterausgangsspannung U_{F} zeitlich voreilt. Der Umrichterausgangsstrom I_{U} ergibt sich gemäss Fig. 3 durch Addition eines Teilfitterausgangsstromes I_{F}, und eines Filterkapazitätsstromes I_{CF} durch die Filterkapazität C_{F}, wobei der Teilfilterausgangsstrom I_{F} durch eine an die Lastanschlüsse 5, 6 angeschlossene elektrische Last 7 bestimmt ist. Gemäss Fig. 3 ist die Umrichterausgangsspannung U_{U} die Summe aus der Teilfilterausgangsspannung U_{F} und einer an der Filterinduktivität L_{F} anliegenden Filterinduktivitätsspannung U_{LF}, wobei die Filterinduktivität L_{F} die vorstehend beschriebene Begrenzung der Umrichterausgangsspannung U_{U} auf den vorgebbaren Wert |U_{Ub}| bewirkt. Vorzugsweise ist der vorgebbare Wert |U_{Ub}| die maximal zulässige Umrichterausgangsspannung, auf die der Umrichter 2 ausgelegt ist, wodurch der Umrichter 2 ausgangsspannungsmässig vorteilhaft nicht überdimensioniert werden muss. Die gegenüber der Umrichterausgangsspannung U_{U} erhöhte Wechselspannung, d.h. die Teilfilterausgangsspannung U_{F} stellt sich somit gemäss Fig. 3 durch die vorstehend beschriebene Einstellung des Umrichterausgangsstromes I_{U} und durch die vorstehend beschriebene Begrenzung der Umrichterausgangsspannung U_{U} ein.

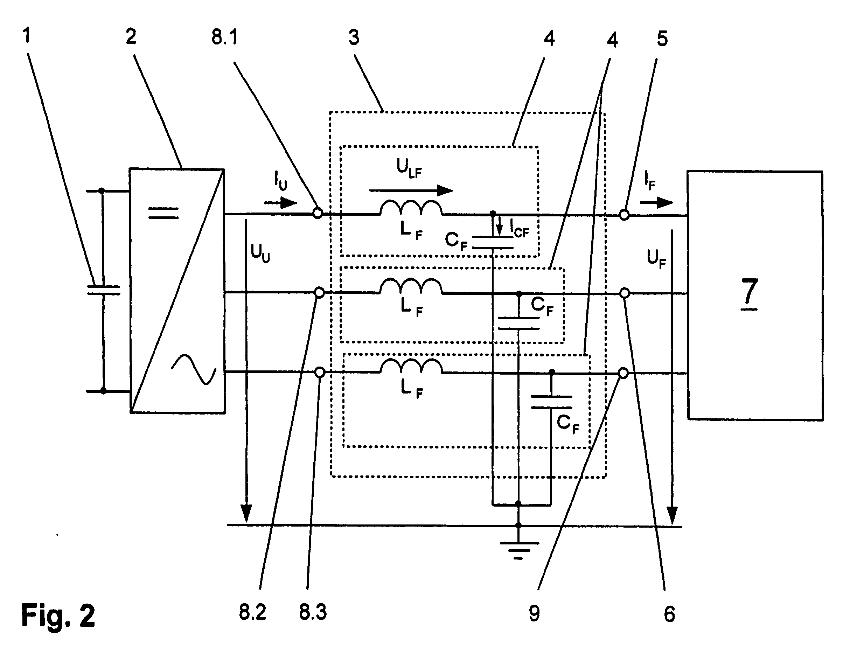

In Fig. 2 ist eine zweite Ausführungsform einer erfindungsgemässen Stromrichterschaltungsanordnung gezeigt, welche sich von der vorstehend beschriebenen ersten Ausführungsform der erfindungsgemässen Stromrichterschaltungsanordnung gemäss Fig. 1 dahingehend unterscheidet, dass der Umrichter 2 n-phasig, d.h. mit n Wechselspannungsanschlüssen 8.1, 8.2, 8.3 ausgebildet ist. Weiterhin umfasst die Filterschaltung 3 n Teitfilterschaltungen 4, wobei gemäss Fig. 2 beispielhaft ein dreiphasiger Umrichter gezeigt ist und somit n=3, im allgemeinen Fall jedoch n ≥ 3 ist. Gemäss Fig. 2 ist an jedem Wechselspannungsanschluss 8.1, 8.2, 8.3 eine Teilfilterschaltung 4 angeschlossen. Bei jeder Teilfilterschaltung 4 gemäss Fig. 2 handelt es sich um dieselbe Teilfilterschaltung 4, wie bei der in Fig. 1 vorstehend beschriebenen Teilfilterschaltung 4, d. h. jede Teilfilterschaltung 4 gemäss Fig. 2 weist eine Filterinduktivität L_{F} und eine Filterkapazität C_{F} auf, wobei die Filterinduktivität L_{F} und die Filterkapazität C_{F} entsprechend den vorstehend beschriebenen Erläuterungen zu Fig. 1 ausgelegt sind, so dass sich die gewünschte, gegenüber der Umrichterausgangsspannung U_{U} erhöhte Wechselspannung bzw. Teilfilterausgangsspannung U_{F} einstellt. Gemäss Fig. 2 ist bei jeder Teilfilterschaltung 4 entsprechend den Ausführungen zu der Teilfilterschaltung 4 gemäss Fig. 1 der vorgebbare Wert |U_{Ub}|, auf den die Umrichterausgangsspannung U_{U} begrenzt ist, vorteilhaft die maximal zulässige Umrichterausgangsspannung. Auf diese maximal zulässige Umrichterausgangsspannung ist der Umrichter 2 ausgelegt, so dass der Umrichter 2 ausgangsspannungsmässig vorteilhaft nicht überdimensioniert werden muss. Gemäss Fig. 2 ist die Filterinduktivität L_{F} der Teilfilterschaltung 4 an den entsprechenden Wechselspannungsanschluss 8.1, 8.2, 8.3 angeschlossen und mit der Filterkapazität C_{F} der zugehörigen Teilfilterschaltung 4 verbunden. Der Verbindungspunkt der Filterinduktivität L_{F} mit der Filterkapazität C_{F} bildet gemäss Fig. 2 einen Lastanschluss 5, 6, 9, wobei allgemein bei einem n-phasig ausgeführten Umrichter 2 n Lastanschlüsse 5, 6, 9 mit n ≥ 3 ausgebildet sind. Zudem sind die Filterkapazitäten C_{F} der Teilfilterschaltungen 4 miteinander verbunden, wobei der Verbindungspunkt der Filterkapazitäten C_{F} vorzugsweise geerdet ist, wodurch Spannungen gegenüber Erde, d.h. sogenannte Common-Mode-Spannungen, vorteilhaft gefiltert werden. Bei dem n-phasig ausgeführten Umrichter 2 gemäss Fig. 2 liegt an jedem Wechselspannungsanschluss 8.1, 8.2, 8.3 eine Umrichterausgangsspannung U_{U} an, die sich auf das Potential des geerdeten Verbindungspunktes der Filterkapazitäten C_{F} bezieht, wobei in Fig. 2 der Übersichtlichkeit halber nur die Umrichterausgangsspannung U_{U} für den Wechselspannungsanschluss 8.1 sowie die weiteren relevanten physikalischen Grössen für die an den Wechselspannungsanschluss 8.1 angeschlossene Teilfilterschaltung 4 dargestellt sind.

Die Verhältnisse der physikalischen Grössen, insbesondere der Spannungen und Ströme der zweiten Ausführungsform der erfindungsgemässen Stromrichterschaltungsanordnung gemäss Fig. 2 entsprechen denen der vorstehend anhand des Zeigerdiagramms gemäss Fig. 3 gemachten Ausführungen der ersten Ausführungsform der erfindungsgemässen Stromrichterschaltungsanordnung nach Fig. 1.

Vorteilhaft wird die erfindungsgemässe Stromrichterschaltung nach Fig. 1 und Fig. 2 in einer Verbindung zur elektrischen Last 7 mit einem Kabel verwendet. Die elektrische Last 7 ist bei der Verbindung an das Kabel angeschlossen, wobei die vorstehend beschriebene Stromrichterschaltungsanordnung gemäss Fig. 1 und Fig. 2 erfindungsgemäss mit den Lastanschlüssen 5, 6, 9 der Teilfilterschaltung 4 an das Kabel angeschlossen ist. Dadurch wird vorteilhaft erreicht, dass mit der erhöhten Teilfilterausgangsspannung U_{F} der Spannungsabfall über dem Kabel kompensiert werden kann, so dass die elektrische Last 7 weiterhin in gewünschtem Masse mit einer gegenüber der Umrichterausgangsspannung U_{U} erhöhten Wechselspannung versorgt werden kann.

Insgesamt kann mittels der erfindungsgemässen Stromrichterschaltungsanordnung auf einfache und besonders kostengünstige Weise eine Wechselspannung, insbesondere eine Umrichterausgangsspannung, erhöht werden, ohne dass zusätzliche Beschaltungen und Komponenten benötigt werden.

### Bezugszeichenliste

- 1: Gleichspannungszwischenkreis
- 2: Umrichter
- 3: Filterschaltung
- 4: Teilfilterschaltung
- 5: ersten Lastanschluss
- 6: zweiter Lastanschluss
- 7: elektrische Last
- 8.1: ersten Wechselspannungsanschluss
- 8.2: zweiter Wechselspannungsanschluss
- 8.3: dritter Wechselspannungsanschluss
- 9: dritter Lastanschluss

## Patentansprüche

1. Stromrichterschaltungsanordnung zur Erhöhung einer Wechselspannung mit einem Umrichter (2), der als Wechselrichter ausgebildet ist, wobei an Wechselspannungsanschlüssen (8.1, 8.2, 8.3) des Umrichters (2) eine Filterschaltung (3) angeschlossen ist und die Filterschaltung (3) mindestens eine Teilfilterschaltung (4) umfasst
**dadurch gekennzeichnet,**
**dass** die Teilfilterschaltung (4) derart ausgebildet ist, dass ein in die Teilfilterschaltung (4) fliessender Umrichterausgangsstrom (I_{U}) gegenüber einer an Lastanschlüssen (5, 6, 9) der Teilfilterschaltung (4) anliegenden Teilfilterausgangsspannung (U_{F}) zeitlich voreilt und eine an den an Wechselspannungsanschlüssen (8.1, 8.2, 8.3) anliegende Umrichterausgangsspannung (U_{U}) auf einen vorgebbaren Wert (|U_{Ub}|) begrenzt wird.

2. Stromrichterschaltungsanordnung nach Anspruch 1, **dadurch gekennzeichnet, dass** die Teilfilterschaltung (4) eine Filterinduktivität (L_{F}) und eine Filterkapazität (C_{F}) aufweist, wobei die Filterkapazität (C_{F}) derart ausgelegt ist, dass der Umrichterausgangsstrom (I_{U}) gegenüber der Teilfilterausgangsspannung (U_{F}) zeitlich voreilend ist und die Filterinduktivität (L_{F}) die Umrichterausgangsspannung (U_{U}) auf den vorgebbaren Wert (|U_{Ub}|) begrenzt.

3. Stromrichterschaltungsanordnung nach Anspruch 2, **dadurch gekennzeichnet, dass** die Filterschaltung (3) bei einem einphasig ausgeführten Umrichter (2) eine einzige Teilfilterschaltung (4) umfasst, wobei die Filterinduktivität (L_{F}) an einem ersten Wechselspannungsanschluss (8.1) des Umrichters (2) angeschlossen ist, ein zweiter Wechselspannungsanschluss (8.2) des Umrichters (2) mit der Filterkapazität (C_{F}) verbunden ist, die Filterkapazität (C_{F}) mit der Filterinduktivität (L_{F}) verbunden ist und der Verbindungspunkt der Filterkapazität (C_{F}) mit der Filterinduktivität (L_{F}) einen ersten Lastanschluss (5) bildet und der Verbindungspunkt des zweiten Wechselspannungsanschlusses (8.2) mit der Filterkapazität (C_{F}) einen zweiten Lastanschluss (6) bildet.

4. Stromrichterschaltungsanordnung nach Anspruch 3, **dadurch gekennzeichnet, dass** der Verbindungspunkt des zweiten Wechselspannungsanschlusses (8.2) mit der Filterkapazität (C_{F}) geerdet ist.

5. Stromrichterschaltungsanordnung nach Anspruch 2, **dadurch gekennzeichnet, dass** die Filterschaltung (3) bei einem n-phasig ausgeführten Umrichter (2) mit n Wechselspannungsanschlüssen (8.1, 8.2, 8.3) n Teilfilterschaltungen (4) umfasst, wobei n ≥ 3 ist, dass an jedem Wechselspannungsanschluss (8.1, 8.2, 8.3) eine Teilfilterschaltung (4) angeschlossen ist, und
dass die Filterinduktivität (L_{F}) der Teilfilterschaltung (4) an den entsprechenden Wechselspannungsanschluss (8.1, 8.2, 8.3) angeschlossen ist und mit der Filterkapazität (C_{F}) der zugehörigen Teilfilterschaltung (4) verbunden ist, wobei der Verbindungspunkt der Filterinduktivität (L_{F}) mit der Filterkapazität (C_{F}) einen Lastanschluss (5, 6, 9) bildet und die Filterkapazitäten (C_{F}) der Teilfilterschaltungen (4) miteinander verbunden sind.

6. Stromrichterschaltungsanordnung nach Anspruch 5, **dadurch gekennzeichnet, dass** der Verbindungspunkt der Filterkapazitäten (C_{F}) geerdet ist.

7. Stromrichterschaltungsanordnung nach einem der vorhergehenden Ansprüche, **dadurch gekennzeichnet, dass** der vorgebbare Wert |U_{Ub}| die maximal zulässige Umrichterausgangsspannung ist.

## Claims

1. Converter circuit arrangement for increasing an alternating voltage with a converter (2), which is designed as an inverter, a filter circuit (3) being connected to alternating voltage terminals (8.1, 8.2, 8.3) of the converter (2) and the filter circuit (3) including at least one partial filter circuit (4), **characterized in that** the partial filter circuit (4) is designed in such a way that a converter output current (I_{U}) flowing in the partial filter circuit (4) is leading in time with respect to a partial filter output voltage (U_{F}) present at load terminals (5, 6, 9) of the partial filter circuit (4) and a converter output voltage (U_{U}) present at the alternating voltage terminals (8.1, 8.2, 8.3) is limited to a specifiable value (|U_{Ub}|).

2. Converter circuit arrangement according to Claim 1, **characterized in that** the partial filter circuit (4) has a filter inductance (L_{F}) and a filter capacitance (C_{F}), the filter capacitance (C_{F}) being designed in such a way that the converter output current (I_{U}) is leading in time with respect to the partial filter output voltage (U_{F}) and the filter inductance (L_{F}) limits the converter output voltage (U_{U}) to the specifiable value (|U_{Ub}|).

3. Converter circuit arrangement according to Claim 2, **characterized in that** the filter circuit (3) in a single-phase converter (2) includes a single partial filter circuit (4), the filter inductance (L_{F}) being connected to a first alternating voltage terminal (8.1) of the converter (2), a second alternating voltage terminal (8.2) of the converter (2) being connected to the filter capacitance (C_{F}), the filter capacitance (C_{F}) being connected to the filter inductance (L_{F}) and the connecting point of the filter capacitance (C_{F}) to the filter inductance (L_{F}) forming a first load terminal (5) and the connecting point of the second alternating voltage terminal (8.2) to the filter capacitance (C_{F}) forming a second load terminal (6).

4. Converter circuit arrangement according to Claim 3, **characterized in that** the connecting point of the second alternating voltage terminal (8.2) to the filter capacitance (C_{F}) is earthed.

5. Converter circuit arrangement according to Claim 2, **characterized in that** the filter circuit (3) in an n-phase converter (2) with n alternating voltage terminals (8.1, 8.2, 8.3) includes n partial filter circuits (4), n being ≥ 3, **in that** a partial filter circuit (4) is connected to each alternating voltage terminal (8.1, 8.2, 8.3) and **in that** the filter inductance (L_{F}) of the partial filter circuit (4) is connected to the appropriate alternating voltage terminal (8.1, 8.2, 8.3) and is connected to the filter capacitance (C_{F}) of the associated partial filter circuit (4), the connecting point of the filter inductance (L_{F}) to the filter capacitance (C_{F}) forming a load terminal (5, 6, 9) and the filter capacitances (C_{F}) of the partial filter circuits (4) being connected together.

6. Converter circuit arrangement according to Claim 5, **characterized in that** the connecting point of the filter capacitances (C_{F}) is earthed.

7. Converter circuit arrangement according to one of the preceding claims, **characterized in that** the specifiable value |U_{Ub}| is the maximum permissible converter output voltage.

## Revendications

1. Circuit de conversion de courant pour augmenter une tension alternative, qui comprend un convertisseur (2) configuré comme convertisseur alternatif, un circuit de filtrage (3) étant raccordé aux bornes de tension alternative (8.1, 8.2, 8.3) du convertisseur (2) et le circuit de filtrage (3) comprenant au moins un circuit partiel de filtrage (4),
**caractérisé en ce que**
le circuit partiel de filtrage (4) est configuré de telle sorte qu'un courant (Iᵤ) de sortie du convertisseur qui traverse le circuit partiel de filtrage (4) est en avance temporelle par rapport à la tension de sortie (U_{F}) du filtre partiel appliquée aux bornes de charge (5, 6, 9) du circuit partiel de filtrage (4) et **en ce qu'**une tension de sortie (U_{U}) du convertisseur appliquée sur les bornes de tension alternative (8.1, 8.2, 8.3) est limitée à une valeur (|U_{Ub}|) prédéterminable.

2. Circuit de conversion de courant selon la revendication 1, **caractérisé en ce que** le circuit partiel de filtrage (4) présente une inductance de filtrage (L_{F}) et une capacité de filtrage (C_{F}), la capacité de filtrage (C_{F}) étant dimensionnée de telle sorte que le courant de sortie (I_{U}) du convertisseur est en avance temporelle par rapport à la tension de sortie (U_{F}) du filtre partiel et **en ce que** l'inductance de filtrage (L_{F}) limite la tension de sortie du convertisseur (U_{U}) à une valeur (|U_{Ub}|) prédéterminable.

3. Circuit de conversion de courant selon la revendication 2, **caractérisé en ce que** lorsque le convertisseur (2) est monophasé, le circuit de filtrage (3) comprend un seul circuit partiel de filtrage (4), l'inductance de filtrage (L_{F}) est raccordée à une première borne de tension alternative (8.1) du convertisseur (2), une deuxième borne de tension alternative (8.2) du convertisseur (2) est reliée à la capacité de filtrage (C_{F}), la capacité de filtrage (C_{F}) est reliée à l'inductance de filtrage (L_{F}), le point de liaison entre la capacité de filtrage (C_{F}) et l'inductance de filtrage (L_{F}) forme une première borne de charge (5) et le point de liaison entre la deuxième borne de tension alternative (8.2) avec la capacité de filtrage (C_{F}) forme une deuxième borne de charge (6).

4. Circuit de conversion de courant selon la revendication 3, **caractérisé en ce que** le point de liaison entre la première borne de tension alternative (8.2) avec la capacité de filtrage (C_{F}) est raccordé à la masse.

5. Circuit de conversion de courant selon la revendication 2, **caractérisé en ce que** lorsque le convertisseur (2) est à n phases avec n bornes de tension alternative (8.1, 8.2, 8.3), le circuit de filtrage (3) comprend n circuits partiels de filtrage (4), n ≥ 3, **en ce qu'**un circuit partiel de filtrage (4) est raccordé à chaque borne de tension alternative (8.1, 8.2, 8.3) et **en ce que** l'inductance de filtrage (L_{F}) du circuit partiel de filtrage (4) est raccordée à la borne de tension alternative (8.1, 8.2, 8.3) correspondante et est reliée à la capacité de filtrage (C_{F}) du circuit partiel de filtrage (4) associé, le point de liaison entre l'inductance de filtrage (L_{F}) et la capacité de filtrage (C_{F}) forme une charge (5, 6, 9) et les capacités de filtrage (C_{F}) des circuits partiel de filtrage (4) sont reliées les unes aux autres.

6. Circuit de conversion de courant selon la revendication 5, **caractérisé en ce que** le point de liaison entre les capacités de filtrage (C_{F}) est raccordé à la masse.

7. Circuit de conversion de courant selon l'une des revendications précédentes, **caractérisé en ce que** la valeur (|U_{Ub}|) prédéterminable est la tension de sortie maximale admissible du convertisseur.
